# EUROPEAN PATENT APPLICATION

(11) **EP 4 806 588 A1**
(43) Date of publication of application: **16.09.2026**
(21) Application number: 25843999.1
(22) Date of filing: 22.02.2025
(51) Int. Cl.: B25B 5/00

(54) **HAND-HELD POWER TOOL MAIN BODY AND HAND-HELD POWER TOOL**

(30) Priority: 22.01.2025 CN 202510098998; 19.02.2025 CN 202510184550
(71) Applicant: Taizhou Juli Tools Co., Ltd., Taizhou, Zhejiang 317608 (CN)
(72) Inventor: HE, Tingwei, Taizhou, Zhejiang 317608 (CN); CHEN, Chao, Taizhou, Zhejiang 317608 (CN); WEN, Li, Taizhou, Zhejiang 317608 (CN)
(74) Representative: Bayramoglu et al.
(86) International application number: PCT/CN2025/078662
(87) International publication number: WO 2026/156965

(57) **Abstract**

The present invention belongs to the technical field of power tools, and particularly relates to a handheld power tool main body and a handheld power tool. The power tool main body includes a mounting sleeve, a pliers base rotatably arranged on the mounting sleeve and configured for mounting a working component, a working mechanism movably arranged on the pliers base, a pushing mechanism mounted on the mounting sleeve and extending out of the mounting sleeve to be connected to the working mechanism, and a driving mechanism. The pushing mechanism includes a lead screw and a movable sleeve. The movable sleeve is arranged on the outer side of the lead screw and connected to the working mechanism. The driving mechanism includes a reducer combined with the lead screw, a motor inverted on the side of the mounting sleeve, and a linkage member mounted between the motor and the reducer. In the present invention, the motor is inverted on the side of the mounting sleeve, and the motor is arranged in parallel with the axes of the mounting sleeve and the lead screw, which reduces the length of the entire tool main body in the vertical direction, minimizes the tool, and adapts to more narrow working scenes.

## Description

### TECHNICAL FIELD

The present invention belongs to the technical field of power tools, and specifically relates to a handheld power tool main body and a handheld power tool.

### BACKGROUND TECHNOLOGY

A power tool is defined as a tool that is actuated by a power supply and drives a working accessory at the front to operate through a transmission mechanism. In the processes such as pipeline construction, electric power construction or the like, the power tool is equipped with different working accessories to achieve different functions, such as electric crimping tools, electric pipe flaring tools, electric cutting tools, etc. Taking an electric crimping tool as an example, the electric crimping tool typically consists of a power supply, a motor driving mechanism and crimping pliers. The power supply supplies power to the motor driving mechanism and controls the motor driving mechanism to start to drive the crimping pliers to crimp the pipeline. According to the shape of existing power tools, there are two types of power tools: handheld vertical type and handheld gun type. The main body of the handheld vertical power tool is vertically arranged, and the battery is mounted at the bottom of the main body, so that the user holds the main body to operate when in use. The gun type power tool has a holding handle arranged vertically or obliquely relative to the main body, shaping like a gun, so that the user holds the handle to operate when in use. In view of overall shape, the handheld vertical power tool features a compact shape for easy carry and use.

The applicant's prior invention patent application CN116810725A discloses a handheld vertical electric crimping tool. A lead screw, a reducer connected to the lead screw, and a motor connected to the reducer are arranged in the main body. The lead screw, the reducer, and the motor are all coaxially arranged and stacked, that is, the central lines of the three are all located on the same vertical line. Further, a controller and a battery pack are sequentially arranged at the bottom of the motor from top to bottom. Therefore, the entire tool has a relatively long length in the vertical direction, and it is inconvenient when the tool is used in some narrow working environments.

### CONTENT OF THE PRESENT INVENTION

In order to solve the above problems, the present invention provides a handheld power tool main body and a handheld power tool, in which a motor is inverted on the side of a mounting sleeve, so that the length of the tool in the vertical direction is reduced thereby to adapt to narrow working environments.

The present invention adopts the following technical solution:
The present invention provides a handheld power tool main body, arranged in a handheld power tool and configured for driving a working component of the handheld power tool to work. The handheld power tool main body includes: a mounting sleeve; a pliers base rotatably arranged on the mounting sleeve and configured for mounting the working component; a working mechanism movably arranged on the pliers base and configured for acting on the working component; a pushing mechanism mounted on the mounting sleeve, extending out of the mounting sleeve to be connected to the working mechanism, and configured for pushing the working mechanism to move; and a driving mechanism. The pushing mechanism includes: a lead screw rotatably arranged in the mounting sleeve, and a movable sleeve movably sleeved on the outer side of the lead screw and connected to the working mechanism. The driving mechanism includes: a reducer combined with the lead screw, a motor inverted on the side of the mounting sleeve, and a linkage member mounted between the motor and the reducer.

In the handheld power tool main body provided by the present invention, the pushing mechanism further includes a driving base for enclosing the linkage member, and the driving base includes: a connecting flange including a first mounting portion for mounting the motor and a second mounting portion for mounting the reducer, and an end cover covering the bottom of the connecting flange. An accommodation cavity for accommodating the linkage member is formed between the end cover and the connecting flange, and the linkage member includes: a motor output gear mounted on a motor shaft of the motor, a reducer input gear connected to the reducer, and an idler gear connecting the motor output gear and the reducer input gear.

In the handheld power tool main body provided by the present invention, a needle roller bearing is embedded in the middle of the idler gear, a mounting shaft is arranged at the middle of the needle roller bearing, one end of the mounting shaft is inserted into the connecting flange, the other end of the mounting shaft is inserted into the end cover, and gaskets are arranged between two end surfaces of the idler gear and the connecting flange and the end cover respectively.

In the handheld power tool main body provided by the present invention, the mounting sleeve is fixed on the second mounting portion and includes: a lead screw mounting portion configured for mounting the lead screw, and a reducer mounting portion integrated with the lead screw mounting portion and configured for mounting the reducer.

In the handheld power tool main body provided by the present invention, the handheld power tool main body further includes an induction assembly. The lead screw mounting portion includes: a guide portion, where a guide groove matched with the movable sleeve is formed in the inner wall of the guide portion; and a mounting portion, where a mounting step for mounting the lead screw is arranged inside the mounting portion. The induction assembly includes: an induction member mounted at one end of the movable sleeve far away from the working mechanism, and a sensor mounted on the outer wall of the mounting portion and configured for cooperating with the induction member.

In the handheld power tool main body provided by the present invention, the working mechanism includes: a pair of rollers configured for acting on the working component, and a roller base configured for mounting the pair of rollers. The movable sleeve includes: a push rod, with one end extending into the mounting sleeve and sleeved on the outer periphery of the lead screw, and the other end extending out of the mounting sleeve and fixed to the roller base; and a lead screw nut movably sleeved on the outer periphery of the lead screw and integrated with or separately arranged on one end of the push rod far away from the roller base. The induction member is mounted on the outer peripheral surface of the lead screw nut.

In the handheld power tool main body provided by the present invention, an indicating recess is arranged at the top end of the mounting sleeve, and the indicating recess is aligned with the sensor in the axial direction.

In the handheld power tool main body provided by the present invention, when the lead screw nut and the push rod are separately arranged, a through hole for the lead screw to pass therethrough is formed in the middle of the lead screw nut, one end of the push rod far away from the roller base forms an extending end extending into the through hole, and an acting surface for abutting against one end surface of the extending end is arranged in the through hole. A clamping groove is formed by circumferential recessing of the inner wall of the through hole at one side of the acting surface, a limiting clamping member is mounted in the clamping groove, and the extending end is located between the limiting clamping member and the acting surface; or, the through hole is provided with a clamping hole at one side of the acting surface, a clamping pin is arranged in the clamping hole, and the movable sleeve is connected to the extending end through the clamping pin.

In the handheld power tool main body provided by the present invention, a mounting plate is integrated with or separately formed at one end of the lead screw adjacent to the reducer, a plane thrust bearing is arranged between the mounting plate and the mounting step, a deep groove ball bearing is arranged on one side of the mounting step away from the plane thrust bearing, and one end of the lead screw passes through the deep groove ball bearing and is combined with the reducer.

In the handheld power tool main body provided by the present invention, the handheld power tool main body further includes: a housing with an inner cavity for mounting the mounting sleeve, a control switch mounted on the housing, a controller mounted in the housing and located at the bottom of the driving base, and a power supply detachably mounted at the bottom of the housing. The sensor, the control switch, the driving motor and the power supply are all electrically connected to the controller.

In the handheld power tool main body provided by the present invention, one end of the pliers base extends into the housing and is threadedly connected to the mounting sleeve, and the other end of the pliers base extends out of the housing. A central hole for the pliers base to extend out is formed in the top of the housing. The edge of the central hole extends inward to form a limiting convex edge, a limiting member is arranged on the side surface of the pliers base, and the projection of the limiting convex edge and the projection of the limiting member in the axial direction are overlapped at least partly; alternatively, a protruding limiting convex portion is arranged on the inner wall of the housing, and the limiting member is allowed to abut against the limiting convex portion when rotating with the pliers base.

The present invention also provides a handheld power tool, including: a main body, and a working component detachably mounted on the main body and driven by the main body to work, where the main body is the handheld power tool main body as described above.

### Function and Effect of the present invention

According to the handheld power tool main body of the present invention, the motor is inverted on the side of the mounting sleeve, and the motor is arranged in parallel with the axes of the mounting sleeve and the lead screw, which reduces the length of the entire tool main body in the vertical direction, reduces the overall size of the tool, and adapts to more narrow working scenes. The inverted motor is connected to the reducer through the linkage mechanism, so as to amplify the torque and transmit the torque to the lead screw, which realizes large thrust output, improves transmission efficiency, and has low energy loss, stable (constant) output force, and high reliability.

Further, in the present invention, the sensor is mounted on the mounting sleeve. When the pliers base (the structure for mounting the working component) needs to be rotated to adjust the mounting direction of the working component during the use of the tool, no matter how the pliers base rotates, the sensor mounted on the mounting sleeve will not be affected, thereby protecting the sensor to ensure the normal use of the sensor.

### DESCRIPTION OF THE DRAWINGS

FIG. 1 is a structural diagram showing the handheld power tool main body of the present invention when a working component is mounted.
FIG. 2 is a cross-sectional view of the structure of the handheld power tool main body according to Embodiment 1 of the present invention.
FIG. 3 is a cross-sectional view of the mounting structure of the motor and the reducer according to Embodiment 1 of the present invention.
FIG. 4 is an exploded view of the mounting structure of the motor and the reducer according to the present invention.
FIG. 5 is a schematic structural diagram showing the lead screw according to Embodiment 1 of the present invention.
FIG. 6 is a cross-sectional view of the mounting structure of the movable sleeve according to Embodiment 1 of the present invention.
FIG. 7 is a schematic structural diagram showing the lead screw nut according to the present invention.
FIG. 8 is a schematic structural diagram showing the mounting sleeve according to the present invention.
FIG. 9 is a cross-sectional view of the mounting structure of the pliers base and the housing according to Embodiment 1 of the present invention.
FIG. 10 is a cross-sectional view of the mounting structure of the lead screw according to Embodiment 3 of the present invention.
FIG. 11 is a cross-sectional view of the mounting structure of the pliers base and the housing according to Embodiment 4 of the present invention.

Reference numerals: main body 10, housing 11, central hole 111, limiting convex edge 112, pliers base 12, mounting section 121, limiting member 122, mounting sleeve 13, lead screw mounting portion 131, guide portion 1311, mounting portion 1312, guide groove 1313, mounting step 1314, mounting recess 1315, reducer mounting portion 132, indicating recess 133, positioning groove 134, working mechanism 20, roller base 21, roller 22, screw 23, pushing mechanism 30, lead screw 31, mounting plate 32, large end 32a, small end 32b, threaded section 311, plane thrust bearing 331, deep groove ball bearing 332, push rod 34, connecting head 341, extending end 342, lead screw nut 35, through hole 351, mounting groove 352, acting surface 353, spiral groove 354, mounting hole 355, reverser 356, clamping groove 357, sliding strip 358, limiting clamping member 37, bearing 38, ball 39, crimping pliers 40, crimping jaw 41, notch 42, driving mechanism 50, motor 51, motor shaft 511, air inlet 512, air outlet 513, reducer 52, first-stage inner gear ring 521, second and third-stage inner gear ring 522, first-stage planet carrier 523, first-stage planet gear 524, second-stage planet carrier 525, second-stage planet gear 526, third-stage planet carrier 527, third-stage planet gear 528, motor output gear 53, reducer input gear 54, idler gear 55, mounting shaft 551, needle roller bearing 552, gasket 553, driving base 56, connecting flange 561, first mounting portion 5611, second mounting portion 5612, end cover 562, induction assembly 60, induction member 61, sensor 62, and screw 621.

### SPECIFIC IMPLEMENTATIONS

In order to make the technical means, creative characteristics, achieved purposes and functions of the present invention easy to understand, the handheld power tool main body and the handheld power tool of the present invention are specifically described below with reference to the embodiments and the accompanying drawings.

### Embodiment 1

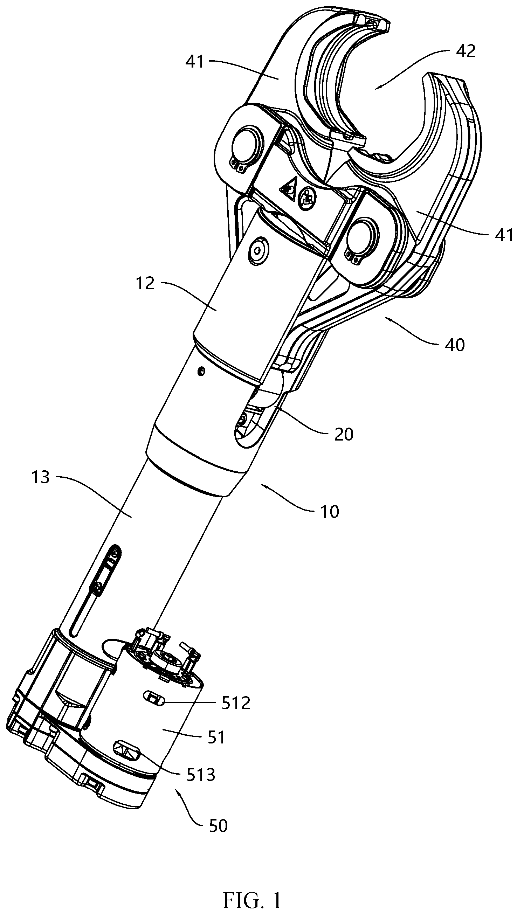

This embodiment provides a handheld power tool, including a main body 10 and a working component. As shown in FIG. 1, the main body 10 is a handheld power tool main body, the working component is crimping pliers 40 (alternatively, cutting pliers, clamping pliers, etc.), and the crimping pliers 40 are detachably mounted at the front end of the main body 10 and can crimp a workpiece such as a pipeline under the drive of the main body 10.

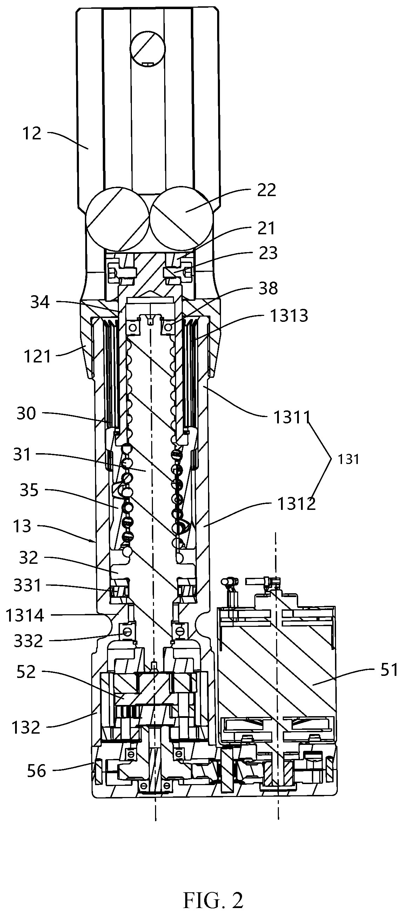

As shown in FIGS. 1 and 2, the main body 10 at least includes a housing 11 (not shown in the drawings), a pliers base 12 for mounting the crimping pliers 40, a mounting sleeve 13, a working mechanism 20 acting on the crimping pliers 40, a pushing mechanism 30 for driving the working mechanism 20 to work, a driving mechanism 50 for controlling the pushing mechanism 30 to work, a controller, an induction assembly 60, a power supply, a control switch, a button and so on. In this embodiment, the housing 11 is a housing that vertically extends and is formed by fixing two half housings on the front and rear with a screw, and the interior thereof is hollow for mounting the mounting sleeve 13 and the driving mechanism 50. The pliers base 12 is mounted at the front end (alternatively, the top end) of the housing 11, and the controller is mounted at the rear end (alternatively, the bottom end) of the housing 11. The power supply is detachably mounted on the housing 11 and located at the bottom of the controller. The button is arranged on the housing 11. The control switch (such as a microswitch) is mounted inside the housing 11, and the control switch is electrically connected to the controller through a wire, so that the button is pressed to push the internal control switch to be switched on (the connections between the control switch, the button and the controller are all prior arts, and would not be described in detail herein).

Taking the vertical direction as the reference, the working mechanism 20, the pushing mechanism 30, the driving mechanism 50, the controller and the power supply are arranged in sequence from top to bottom. Specifically, the working mechanism 20 includes a pair of rollers 22 for acting on the crimping pliers 40 and a roller base 21 for mounting the rollers 22. The roller base 21 and the pair of rollers 22 are mounted in the pliers base 12, and the roller base 21 can drive the pair of rollers 22 to move along the axial direction of the pliers base 12 under the action of the pushing mechanism 30. The crimping pliers 40 have a pair of crimping jaws 41 symmetrically arranged. A notch 42 for clamping the workpiece is formed between the front ends of the pair of crimping jaws 41. The tail ends of the pair of crimping jaws 41 correspond to the pair of rollers 22 respectively. The pair of crimping jaws 41 are rotatable under the push of the pair of rollers 22, so as to crimp the workpiece in the notch 42. One end of the pliers base 12 extends into the housing 11 and is provided with a mounting section 121 for rotational connection with the mounting sleeve 13, and the other end of the pliers base 12 extends out of the housing 11 and is detachably connected to the crimping pliers 40, which facilitates the disassembly and replacement of the crimping pliers 40.

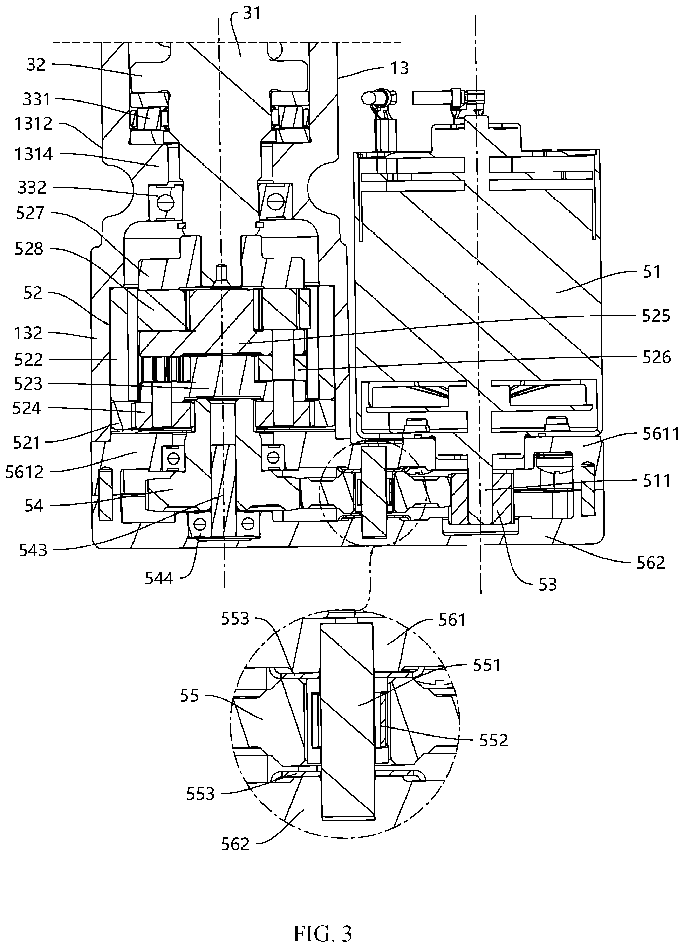

The pushing mechanism 30 is mounted on the mounting sleeve 13, and the front end of the pushing mechanism 30 extends out of the mounting sleeve 13 and is connected to the roller base 21 of the working mechanism 20. Specifically, as shown in FIG. 3, the pushing mechanism 30 includes a lead screw 31 and a movable sleeve sleeved on the outer side of the lead screw 31 for driving the roller base 21 to move. The lead screw 31 is mounted in the mounting sleeve 13 and can be driven to rotate by the driving mechanism 50. A threaded section 311 is formed on the outer periphery of the lead screw 31, and the movable sleeve is sleeved on the threaded section 311. During the rotation process of the lead screw 31, the movable sleeve moves axially along the lead screw 31 under the action of the threaded section 311. The outer end of the movable sleeve extends out of the mounting sleeve 13 and is fixed to the roller base 21. During the axial movement process, the movable sleeve drives the roller base 21 and the rollers 22 to move and roll axially, so as to achieve the work of the crimping pliers 40.

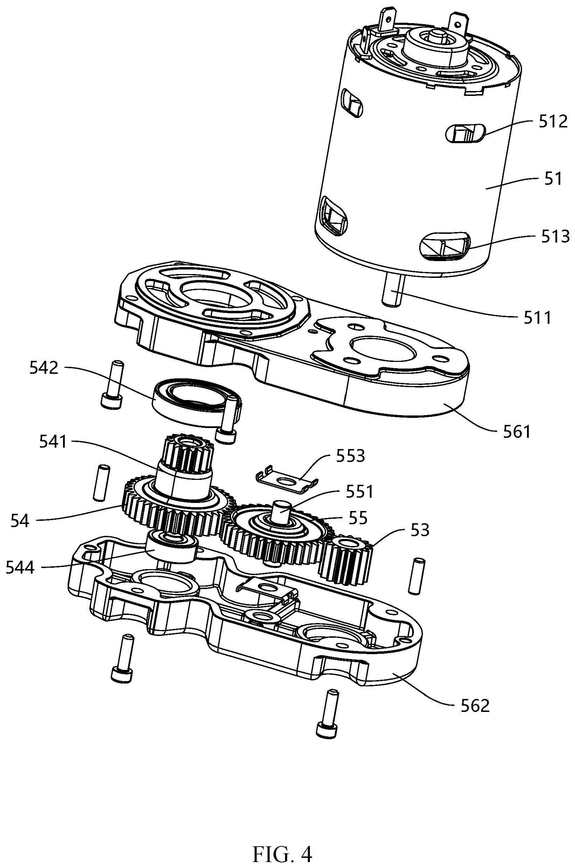

The driving mechanism 50 includes a motor 51, a reducer 52, a linkage member and a driving base 56 for mounting the motor 51 and the linkage member. The reducer 52 is mounted in the mounting sleeve 13. One end of the reducer 52 is combined with the lead screw 31, and the other end of the reducer 52 is connected to the motor 51 through the linkage member. The motor 51 is electrically connected to the controller, the controller controls the motor 51 to work, and the lead screw 31 is driven to rotate by the motor 51 and the reducer 52. Specifically, as shown in FIG. 2, the motor 51 is inverted on a side of the mounting sleeve 13, and the axis of the motor 51 is parallel to the axis of the mounting sleeve 13 (or the lead screw 31). As shown in FIGS. 3 and 4, the linkage member includes a motor output gear 53 mounted on the motor shaft 511 of the motor 51, a reducer input gear 54 connected to the reducer 52, and an idler gear 55 connecting the motor output gear 53 and the reducer input gear 54. The driving base 56 includes a connecting flange 561 and an end cover 562 that are fixed by a screw. The connecting flange 561 includes a first mounting portion 5611 for mounting the motor 51 and a second mounting portion 5612 for mounting the reducer 52 (or the mounting sleeve 13). The end cover 562 covers the bottom of the connecting flange 561, and an accommodation cavity for accommodating the linkage member is formed between the end cover 562 and the connecting flange 561. The motor output gear 53 is a gear. The reducer input gear 54 is a first-stage sun gear, and the middle of the reducer input gear 54 extends toward the reducer 52 to form an output end 541. The output end 541 passes through the second mounting portion 5612 to form an output gear connected to the reducer 52, and a bearing 542 is arranged between the output end 541 and the second mounting portion 5612. A central through hole is axially formed in the middle of the reducer input gear 54. A rotating shaft 543 is mounted at the bottom of the central through hole. The upper end of the rotating shaft 541 is inserted into the central through hole, the lower end of the rotating shaft 541 is inserted into the end cover 562, and the bearing 542 is arranged between the rotating shaft 541 and the end cover 562.

A hole for the motor shaft 511 to pass therethrough is formed in the middle of the first mounting portion 5611. The motor shaft 511 passes through the hole and then extends into the accommodation cavity. The motor shaft 511 is provided with the motor output gear 53. The mounting sleeve 13 is fixed above the second mounting portion 5612 by a screw. A hole for a main shaft of the reducer input gear 54 to pass therethrough is formed in the middle of the second mounting portion 5612, and the main shaft of the reducer input gear 54 passes through the hole and then is inserted into the reducer 52. The idler gear 55 is mounted between the motor output gear 53 and the reducer input gear 54 through a mounting shaft 551, and two sides of the idler gear 55 are respectively meshed with the motor output gear 53 and the reducer input gear 54. One end of the mounting shaft 551 is inserted into the connecting flange 561 (and located between the first mounting portion 5611 and the second mounting portion 5612), and the other end of the mounting shaft 551 is inserted into the end cover 562. A needle roller bearing 552 is further arranged between the outer periphery of the mounting shaft 551 and the central hole of the idler gear 55. Gaskets 553 are arranged between two end surfaces of the idler gear 55 and the connecting flange 561 and the end cover 562 respectively to avoid wear caused by the contact of the idler gear 55 with the connecting flange 561 and the end cover 562.

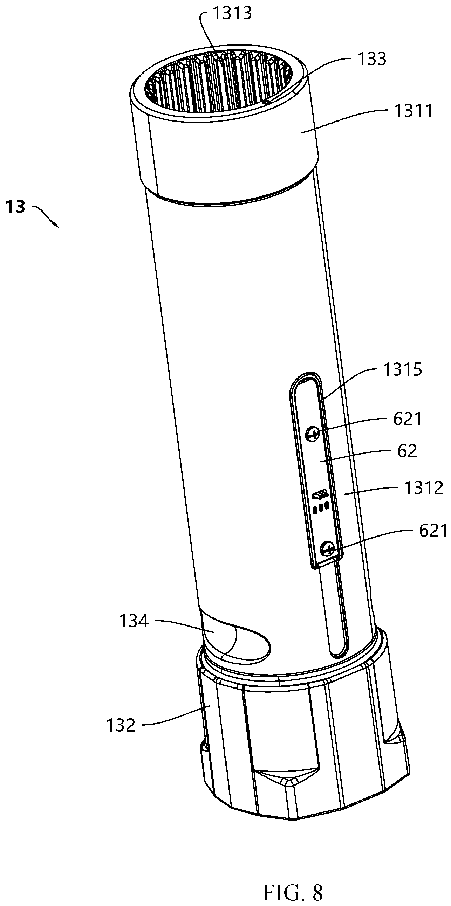

In this embodiment, as shown in FIGS. 2 and 8, the mounting sleeve 13 is an integrated sleeve structure and includes a lead screw mounting portion 131 and a reducer mounting portion 132. The lead screw 31 is mounted in the lead screw mounting portion 131, and the reducer mounting portion 132 is integrated with the lead screw mounting portion 131 and configured for mounting the reducer 52. In other words, the reducer housing for mounting the reducer 52 and the mounting housing for mounting the lead screw 31 are made into an integrated structure, which significantly simplifies the mounting structure, lowers the cost, makes the structure more compact and stable, and facilitates the miniaturization and light weight of the tool. In addition, the bottom of the mounting sleeve 13 is mounted on the connecting flange 561 of the driving base 56, the lead screw 31 and the reducer 52 are enclosed inside the mounting sleeve 13, and the linkage member is enclosed inside the driving base 56. In this way, the relatively enclosed structure allows the tool to work reliably for pipeline construction in relatively harsh environments with dust, sand, metal swarf and the like. Further, lubricating grease is applied to the gears, bearings and other parts inside the driving base 56, and a closed space is formed inside the driving base 56 to avoid leakage of the lubricating grease, thereby ensuring the lubrication conditions of the gear transmission parts.

The control motor 51 of this embodiment is a sensorless brushless motor. Compared with the traditional sensor-involved motor (having the Hall element), the sensorless brushless motor reduces the circuit layout and the parts. In a high-power handheld power tool, since heat easily affects electrical components, the service life is lengthened due to the adoption of the sensorless brushless motor. As shown in FIG. 3, the reducer 52 is a three-stage planetary structure, and the three-stage planetary structure is mounted in the reducer mounting portion 132 of the mounting sleeve 13. The three-stage planetary structure includes a first-stage inner gear ring 521, a second and third-stage inner gear ring 522, a first-stage planet carrier 523, a first-stage planet gear 524, a second-stage planet carrier 525, a second-stage planet gear 526, a third-stage planet carrier 527 and a third-stage planet gear 528. The first-stage inner gear ring 521 and the second and third-stage inner gear ring 522 are stacked and closely mounted on the inner wall of the reducer mounting portion 132. There are a plurality of first-stage planet gears 524 mounted on the first-stage planet carrier 523, and the inner sides of the plurality of first-stage planet gears 524 are meshed with the output gear on the output end 541 of the reducer input gear 54. There are a plurality of second-stage planet gears 526 that are mounted on the second-stage planet carrier 525 and meshed with the first-stage planet carrier 523. There are a plurality of third-stage planet gears 528 that are mounted on the third-stage planet carrier 527 and meshed with the second-stage planet carrier 525. The lower end of the lead screw 31 is inserted into an insertion hole formed in the middle of the third-stage planet carrier 527, and the lower end of the lead screw 31 is inserted into the middle of the third-stage planet carrier 527.

In this embodiment, the motor 51 is inverted and arranged on the side of the mounting sleeve 13, which significantly shortens the length of the entire main body, reduces the length of the entire tool main body in the vertical direction, minimizes the tool, and adapts to more narrow working scenes. The inverted motor 51 is connected to the reducer 52 through the linkage member (the motor output gear 53, the idler gear 55 and the reducer input gear 54). Under the action of the linkage member, the torque is amplified and transmitted to the lead screw, so as to realize large thrust output, improve transmission efficiency, and have low energy loss, stable (constant) output force, and high reliability.

In addition, after the motor 51 is inverted, as shown in FIG. 1, the air inlet 512 is located at the upper part, and the air outlet 513 is located at the lower part, which can simultaneously dissipate heat from the motor 51, the linkage member, the reducer 52 on the side and the controller at the bottom, improve the heat dissipation and cooling effects, solve the problem of the tool being heated during continuous work, and greatly prolong the continuous working time of the tool (in the prior art, the motor, the lead screw and the reducer are vertically arranged, the air outlet is located at the upper side, the heat dissipation effect is poor, especially for the controller located at the bottom of the motor, the heat dissipation can hardly be achieved, so the continuous working time of the tool is limited, and the tool must be stopped and cooled down after working for a certain time before working again).

The lead screw mounting portion 131 of the mounting sleeve 13 includes a guide portion 1311 and a mounting portion 1312. The guide portion 1311 is located at one end of the mounting portion 1312 far away from the reducer mounting portion 132. A plurality of guide grooves 1313 matched with the movable sleeve are formed in the inner wall of the guide portion 1311. A mounting step 1314 for mounting the lead screw 31 is arranged inside the mounting portion 1312 and adjacent to the reducer mounting portion 132. A mounting plate 32 is integrated with or separately arranged at one end of the lead screw 31 adjacent to the reducer 52 (as shown in FIG. 2 or FIG. 3, the mounting plate 32 and the lead screw 31 are integrally arranged, which avoids mistakes and wear during mounting). A plane thrust bearing 331 (also called a plane needle roller bearing) is arranged between the mounting plate 32 and the mounting step 1314. A deep groove ball bearing 332 is arranged on one side of the mounting step 1314 away from the plane thrust bearing 331, and one end of the lead screw 31 passes through the deep groove ball bearing 332 (also called a ball bearing) and is connected to the reducer 52. The plane thrust bearing 331 can not only cooperate with the deep groove ball bearing 332 to form a stable mounting between the lead screw 31 and the mounting portion 1312, but also offset the recoil in the axial direction of the lead screw 31, so that the stress of the lead screw 31 is more stable, thereby protecting the lead screw 31.

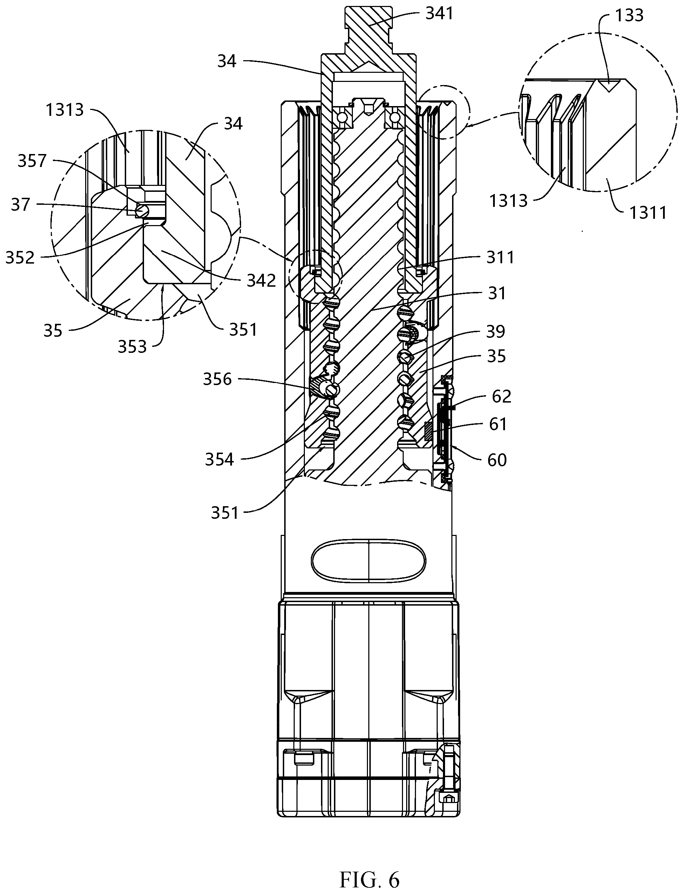

The induction assembly 60 is mounted between the mounting sleeve 13 and the movable sleeve and includes an induction member 61 and a sensor 62. The movable sleeve includes a push rod 34 and a lead screw nut 35 which are integrated or separately connected. The induction member 61 is mounted on the lead screw nut 35, and the sensor 62 is mounted on the mounting portion 1312 of the mounting sleeve 13. In this embodiment, taking the movable sleeve in a separate arrangement as example: as shown in FIG. 6, a through hole 351 for the lead screw 31 to pass therethrough is formed in the middle of the lead screw nut 35, the induction member 61 is mounted on the outer peripheral surface of the lead screw nut 35 adjacent to the bottom, and the lead screw nut 35 is arranged at one end of the push rod 34. The structure of the push rod 34 has a closed end and an open end, and a connecting head 341 is formed at the closed end. As shown in FIG. 2, the connecting head 341 extends out of the mounting sleeve 13 and is fixed with the roller base 21 through a screw 23, thereby connecting the push rod 34 and the roller base 21. The interior of the push rod 34 is hollow, and the open end is sleeved on the outer side of one end of the lead screw 31 far away from the reducer 52.

As shown in FIG. 6, the open end of the push rod 34 extends into the through hole 351 of the lead screw nut 35 to form an extending end 342. The extending end 342 is an annular protrusion structure, and the push rod 34 is connected to the lead screw nut 35 through the annular protrusion structure. The lead screw nut 35 is arranged at the tail end of the push rod 34 (that is, the lead screw nut 35 is located at one end of the push rod 34 far away from the roller base 21). During the rotation process of the lead screw 31, the push rod 34 can drive the roller base 21 to move, thereby driving the rollers 22 to push the crimping pliers 40 to work. During the movement process of the rollers 22, the rollers 22 come into contact with the inner ends of the crimping jaws 41, and the crimping jaws 41 rotate around the central rotating shaft under the thrust of the rollers 22, so that the crimping pliers 40 close to crimp the workpiece. Since the structure and principle for driving the crimping pliers to work by using the rollers belong to the prior art, they are not described in detail here.

As shown in FIG. 6, a mounting groove 352 is arranged at one end of the through hole 351 of the lead screw nut 35 adjacent to the push rod 34. An annular acting surface 353 is formed at the bottom of the mounting groove 352, and the acting surface 353 abuts with the lower end surface of the extending end 342 of the push rod 34. Due to the interaction of the acting surface 353 and the push rod 34, the lead screw nut 35 pushes the push rod 34 to move in the direction of the roller base 21 under the action of the lead screw 31. The specific mounting structure of the lead screw nut 35 and the push rod 34 is as follows: a clamping groove 357 is formed by circumferential recessing of the inner wall of the through hole 351 at one side of the acting surface 353, a limiting clamping member 37 is mounted in the clamping groove 357, and the lead screw nut 35 and the push rod 34 are connected through the limiting clamping member 37, so that the extending end 342 is located between the limiting clamping member 37 and the acting surface 353.

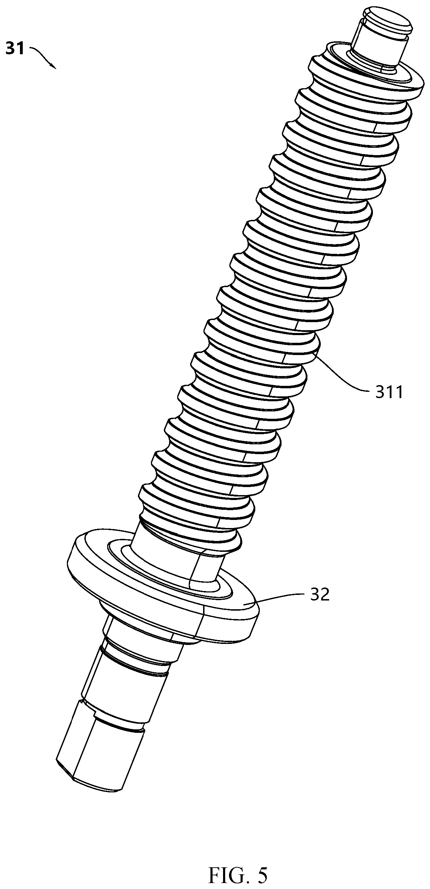

The push rod 34 has two moving directions. One is the advancing direction in which the roller base 21 is pushed to move towards the crimping pliers 40, and the other is the retreating direction which is opposite to the advancing direction. As shown in FIG. 5, the acting surface 353 of the lead screw nut 35 acts on the lower end surface of the extending end 342 of the push rod 34, thereby achieving the movement of the push rod 34 towards the advancing direction, which features a large bearing capacity and is convenient for bearing the large pushing force during work. The end structure of the lead screw nut 35 and the limiting clamping member 37 act on the extending end 342, thereby achieving the movement of the push rod 34 towards the retreating direction. At this time, the stress is relatively small, thereby lowering the influence on the service life of the limiting clamping member 37.

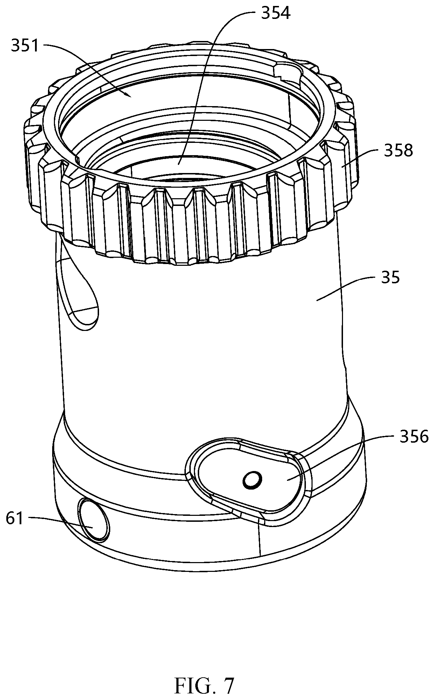

As shown in FIGS. 6 and 7, the inner wall of the through hole 351 is provided with a spiral groove 354 matched with the threaded section 311 on the surface of the lead screw 31. A ball 39 is arranged between the spiral groove 354 and the threaded section 311. A mounting hole 355 is formed in the lead screw nut 35 for mounting a reverser 356, which forms an internal circulation ball screw structure in combination with the lead screw 31. A sliding strip 358 (alternatively, a spline tooth structure) is further arranged on the outer periphery of the lead screw nut 35, and the inner wall of the guide portion 1311 is provided with a guide groove 1313 (alternatively, a spline groove structure matched with the spline tooth) matched with the sliding strip 358, so that the lead screw nut 35 can move stably axially along the inner wall of the guide portion 1311 of the mounting sleeve 13, which plays a good guiding and stabilizing role.

The induction member 61 is mounted on the peripheral surface of one end of the lead screw nut 35 adjacent to the sensor 52. The induction member 61 is preferably an induced magnet, and the sensor 62 is preferably a Hall sensor. The sensor 62 is mounted on the mounting portion 1312 of the mounting sleeve 13 and configured for sensing the position of the induced magnet, and the sensor 62 is electrically connected to the controller through a wire 63, such that the sensor 62 transmits a signal to the controller.

The mounting sleeve 13 is mounted inside the housing 11. As shown in FIG. 8, a mounting recess 1315 is formed on the outer peripheral surface of the mounting portion 1312, and the sensor 62 is fixed in the mounting recess 1315 through a screw 621. In this embodiment, the shape of the mounting recess 1315 is similar to a runway. The sensor 62 is mounted in an embedded manner. In order to facilitate the induction between the sensor 62 and the induction member 61 and improve the induction accuracy, the induction member 61 is mounted on the peripheral surface of the lead screw nut 35 adjacent to the bottom and corresponds to the position of the sensor 62. Since the sensor 62 is mounted on the mounting sleeve 13, it is closer to the controller. Moreover, since the mounting sleeve 13 is arranged inside the housing 11 and remains fixed relative to the housing 11, even if the working angle of the crimping pliers needs to be adjusted during use, the sensor 62 is not affected, so as to ensure the normal use of the sensor 62. A positioning groove 134 is formed by recessing on the outer periphery of the mounting sleeve 13 at the junction of the lead screw mounting portion 131 and the reducer mounting portion 132 for positioning and mounting with the interior of the housing.

An indicating recess 133 is arranged on the top end surface of the mounting sleeve 13 and corresponds to the sensor 62, and the indicating recess 133 is aligned with the sensor 62 in the axial direction. The indicating recess 1316 is arranged to indicate the mounting position of the induction member 61 during assembly. After being aligned with the indicating recess 133, the induction member 61 is mounted into the mounting sleeve 13, so that the induction member 61 faces directly the sensor 62 after mounting, thereby ensuring the induction accuracy.

During the movement of the induction member 61 following the lead screw nut 35, the induction member 61 has an initial zero position, a pipe crimping completion position and a full stroke position. During the work of the tool, the motor 51 rotates forward to drive the lead screw 31 to rotate, so that the lead screw nut 35 drives the induction member 61 to move from the initial zero position. At the same time, the lead screw nut 35 drives the push rod 34 to advance, and the roller base 21 on the push rod 34 drives the rollers 22 to approach the crimping pliers. When the rollers 22 contact the crimping pliers, the crimping pliers start to rotate and close under the action of the rollers 22, and crimp the pipe during the closing process until the crimping pliers completely close. At this time, the induction member 61 moves to the pipe crimping completion position, and the motor pauses for a period of time. Then the motor 51 rotates reversely to drive the lead screw 31 to rotate reversely, so that the lead screw nut 35 drives the induction member 61 to return to the initial zero position from the pipe crimping completion position, thereby completing one cycle of working. When the crimping pliers 40 are not mounted on the pliers base 12, the motor is started and the roller base 21 drives the rollers 22 to advance without obstruction. At this time, the rollers 22 can complete a full stroke, that is, the induction member 61 reaches the full stroke position. The full stroke position is the position where the induction member 61 moves to a maximum stroke that is preset. Normally, the stroke from the initial zero position to the pipe crimping completion position is less than the maximum stroke.

The sensor 62 is configured to sense the position of the induction member 61. When the tool is started, if the induction member 61 is not at the initial zero position, the motor 51 will first rotate reversely to allow the lead screw nut 35 to drive the induction member 61 back to the initial zero position, and then the motor 51 will rotate forward to control the rollers to extend, so that the crimping pliers gradually close to crimp the workpiece.

The mounting sleeve 13 is arranged outside the lead screw 31, the push rod 34 and the lead screw nut 35, and the end part of the mounting sleeve 13 is connected to the pliers base 12. One end of the mounting sleeve 13 adjacent to the roller base 21 is threadedly and rotatably connected to the mounting section 121 of the pliers base 12. The interior of the mounting sleeve 13 is hollow, and the lead screw 31 and the lead screw nut 35 are enclosed inside the mounting sleeve 13. A gap for the movement of the push rod 34 and the lead screw nut 35 is formed between the inner wall of the mounting sleeve 13 and the outer wall of the lead screw 31, thereby forming a relatively closed space between the push rod 34, the lead screw nut 35 and the mounting sleeve 13. The lead screw 31 is located in the closed space, so as to achieve a sealed protection on the lead screw 31, prevent dust and impurities from entering the closed space, and avoid affecting the precision of the lead screw.

As shown in FIG. 2, a bearing 38 is further sleeved at the end part of the lead screw 31 located inside the push rod 34, the bearing 38 is fixed on the lead screw 31 through a clamp spring, and the bearing 38 is located between the top end of the lead screw 31 and the inner wall of the push rod 34. In this way, the rotation of the lead screw 31 is more stable, the stroke of the lead screw nut 35 is restricted, which prevents the lead screw nut 35 from being separated from the lead screw 31, and makes the structure more stable.

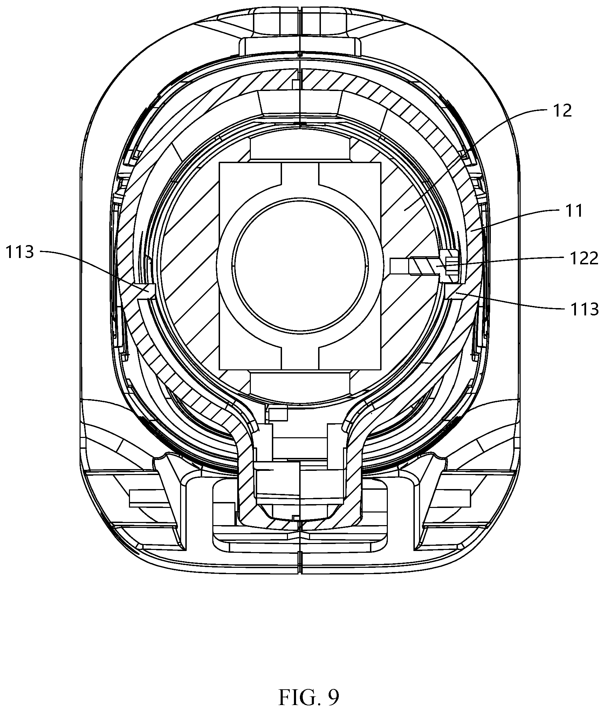

As shown in FIG. 9, one end (mounting section 121) of the pliers base 12 extends into the housing 11 and then is threadedly and rotatably connected to the top of the mounting sleeve 13, and the other end of the pliers base 12 extends out of the housing 11 for mounting the crimping pliers 21. A limiting member 122 (such as a screw) is arranged on the peripheral surface of the pliers base 12, and the limiting member 122 has a limiting head protruding out of the outer peripheral surface of the pliers base 12. A protruding limiting convex portion 113 is arranged on the inner wall of the housing 11. The limiting head on the limiting member 122 can abut against the limiting convex portion 113 when rotating with the pliers base 12, so as to limit the rotation angle of the pliers base 12. The limiting convex portion 113 and the limiting member 122 are almost at the same height. The number of the limiting convex portions 113 corresponds to the rotation angle of the pliers base 12. For example, when one limiting convex portion 113 is arranged, the rotation angle of the pliers base 12 is close to 360° (in fact, because the limiting convex portion 113 itself has a certain width, the rotation angle is actually less than 360°); or as shown in FIG. 9, two limiting convex portions 113 are arranged, and in this case, the rotation angle of the pliers base 12 is about 180°. Therefore, the number of the limiting convex portions 113 can be set according to the actual rotation angle required by the pliers base 12.

### Embodiment 2

On the basis of the above Embodiment 1, in this embodiment, as shown in FIG. 8, the shape of the mounting recess 1315 formed at the middle of the mounting sleeve 13 for mounting the sensor 62 has a semicircular end and a linear end. The design adopting different shapes at the two ends can play a role in preventing wrong assembly during mounting.

### Embodiment 3

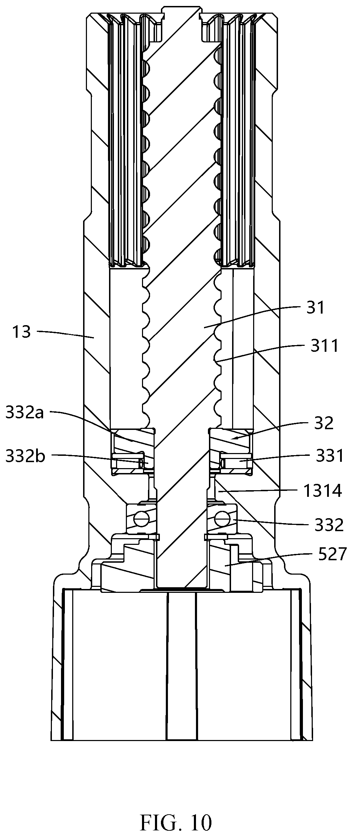

This embodiment is basically the same as the above Embodiments 1 and 2. The differences are as follows: in Embodiments 1 and 2, the lead screw 31 and the mounting plate 32 thereon are integrally arranged, while in this embodiment, as shown in FIG. 10, the mounting plate 32 is separately sleeved on the outer periphery of the lead screw 31 above the mounting step 1314 of the mounting sleeve 13. The cross section of the mounting plate 32 has a T shape, including a large end 32a with a larger outer diameter and a small end 32b with a smaller outer diameter. The plane thrust bearing 331 is arranged between the outer periphery of the small end 32b and the inner wall of the mounting sleeve 13. The separate structure is convenient for disassembly and replacement, reduces waste during processing and lowers the cost.

### Embodiment 4

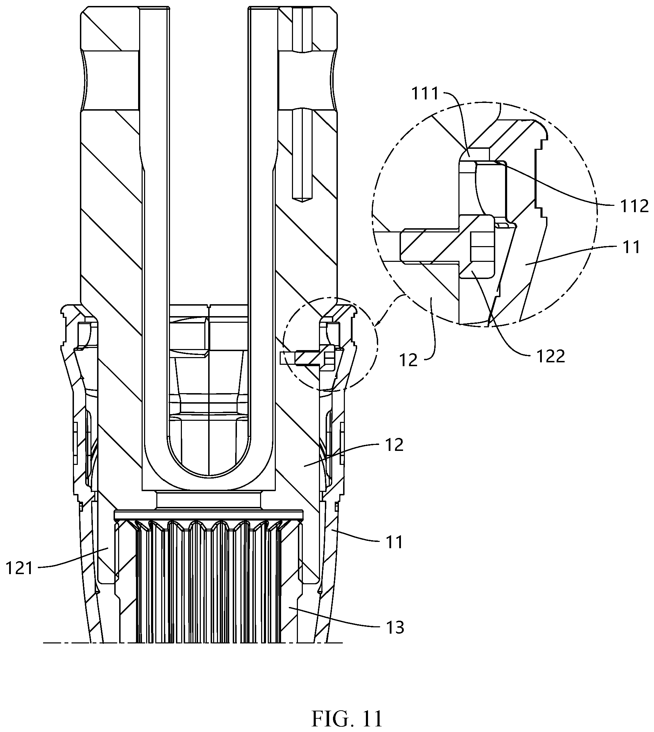

This embodiment is basically the same as the above Embodiments 1-3, except for the limiting structure during the rotation of the pliers base 12. As shown in FIG. 11, one end (mounting section 121) of the pliers base 12 extends into the housing 11 and then is threadedly and rotatably connected to the top of the mounting sleeve 13, and the other end of the pliers base 12 extends out of the housing 11 for mounting the crimping pliers 21. A central hole 111 for the pliers base 12 to extend out is formed in the top of the housing 11. The edge of the central hole 111 extends inward to form a limiting convex edge 112. A limiting member 122 (such as a screw) is arranged on the peripheral surface of the pliers base 12. The projection of the limiting convex edge 112 and the projection of the limiting member 122 in the axial direction are overlapped partly. Since the pliers base 12 is threadedly and rotatably connected to the mounting sleeve 13, when the pliers base 12 is rotated, the pliers base 12 moves axially relative to the mounting sleeve 13, and the limiting convex edge 112 and the limiting member 122 cooperate to prevent the pliers base 12 from being separated due to rotation. The mounting position of the limiting member 122 is set to be adjacent to the limiting convex edge 112, and as the distance between the limiting member 122 and the limiting convex edge 112 decreases, the rotation angle of the pliers base 12 decreases (or the number of turns decreases).

### Function and Effect of the Embodiments

According to the handheld power tool and the main body thereof in the above embodiments, the motor 51 is inverted and arranged on the side of the mounting sleeve 13, which significantly shortens the length of the entire main body, reduces the length of the entire tool main body in the vertical direction, minimizes the tool, and adapts to more narrow working scenes. The inverted motor 51 is connected to the reducer 52 through the linkage member (the motor output gear 53, the idler gear 55 and the reducer input gear 54). Under the action of the linkage member, the torque is amplified and transmitted to the lead screw, so as to realize large thrust output, improve transmission efficiency, and have low energy loss, stable (constant) output force and high reliability. In addition, after the motor 51 is inverted, the air inlet 512 is located at the upper part, and the air outlet 513 is located at the lower part, which can simultaneously dissipate heat from the motor 51, the linkage member, the reducer 52 on the side and the controller at the bottom, improve the heat dissipation and cooling effects, solve the problem of the tool being heated during continuous work, and greatly prolong the continuous working time of the tool.

Further, since the sensor 62 is mounted on the mounting sleeve 13 and the corresponding induction member 61 is mounted on the lead screw nut 34, when the pliers base 12 (the structure for mounting the working component) needs to be rotated to adjust the mounting direction of the working component during the use of the tool, no matter how the pliers base 12 rotates, the sensor 62 mounted on the mounting sleeve 13 will not be affected (that is, the wire connecting the sensor 62 to the controller will not be wound or broken due to rotation), thereby protecting the sensor 62 to ensure the normal use of the sensor 62.

Further, the mounting sleeve 13 is an integrated design for mounting the lead screw 31 and the reducer 52, which eliminates the separate housing for the reducer 52, simplifies the structure, reduces the cost, and makes the entire rotating structure of the lead screw 31 more stable.

Furthermore, since the lead screw 31 is arranged in the housing 11, and the push rod 34 and the lead screw nut 35 are sleeved on the outer periphery of the lead screw 31, a relatively closed space is formed on the peripheral surface inside the guide sleeve, which can prevent dust from entering to affect the lead screw 31 and protect the lead screw 31.

Furthermore, since the hardness required by the push rod 34 in actual work is smaller than that of the lead screw nut 35, the push rod 34 and the lead screw nut 35 are separately arranged in the above embodiments and made of two materials having different hardness, which can reduce the cost and requirements to a certain extent.

Furthermore, since the control motor is the sensorless brushless motor 51, compared with the traditional sensor-involved motor (having the Hall element), the circuit layout and the parts are reduced. In a high-power handheld power tool, since heat easily affects electrical components, the service life is lengthened due to the adoption of the sensorless brushless motor.

The above embodiments are only used to illustrate the specific implementation of the present invention, but the present invention is not limited to the description scope of the above embodiments. For example, in the case provided by the above embodiments, the push rod and the lead screw nut are separately arranged, but in actual cases, the push rod and the lead screw nut can also be integrally arranged; in the case provided by the above embodiments, the working component is the crimping pliers as an example, but in actual cases, it can also be replaced with a cutter, clamping pliers, or other working components in combination with environments, that is, the working component is replaceable according to different working environments and requirements.

## Claims

1. A handheld power tool main body, arranged in a handheld power tool, configured for driving a working component of the handheld power tool to work, and comprising:
a mounting sleeve;
a pliers base, rotatably arranged on the mounting sleeve, and configured for mounting the working component;
a working mechanism, movably arranged on the pliers base, and configured for acting on the working component;
a pushing mechanism, mounted on the mounting sleeve, extending out of the mounting sleeve to be connected to the working mechanism, and configured for pushing the working mechanism to move; and
a driving mechanism;
wherein the pushing mechanism comprises:
a lead screw, rotatably arranged in the mounting sleeve; and
a movable sleeve, movably sleeved on an outer side of the lead screw, and connected to the working mechanism;
wherein the driving mechanism comprises:
a reducer, combined with the lead screw;
a motor, inverted on a side of the mounting sleeve; and
a linkage member, mounted between the motor and the reducer.

2. The handheld power tool main body according to claim 1, wherein the driving mechanism further comprises a driving base for enclosing the linkage member, and the driving base comprises:
a connecting flange, comprising a first mounting portion for mounting the motor and a second mounting portion for mounting the reducer; and
an end cover, covering a bottom of the connecting flange;
wherein an accommodation cavity for accommodating the linkage member is formed between the end cover and the connecting flange, and the linkage member comprises:
a motor output gear, mounted on a motor shaft of the motor;
a reducer input gear, connected to the reducer; and
an idler gear, connecting the motor output gear and the reducer input gear.

3. The handheld power tool main body according to claim 2, wherein a needle roller bearing is embedded in a middle of the idler gear, a mounting shaft is arranged at a middle of the needle roller bearing, one end of the mounting shaft is inserted into the connecting flange, the other end of the mounting shaft is inserted into the end cover, and gaskets are arranged between two end surfaces of the idler gear and the connecting flange and the end cover, respectively.

4. The handheld power tool main body according to claim 2, further comprising an induction assembly, wherein the mounting sleeve is fixed on the second mounting portion and comprises:
a lead screw mounting portion, configured for mounting the lead screw; and
a reducer mounting portion, integrated with the lead screw mounting portion, and configured for mounting the reducer;
wherein the lead screw mounting portion comprises:
a guide portion, wherein a guide groove matched with the movable sleeve is formed in an inner wall of the guide portion; and
a mounting portion, wherein a mounting step for mounting the lead screw is arranged inside the mounting portion;
wherein the induction assembly comprises:
an induction member, mounted at one end of the movable sleeve far away from the working mechanism; and
a sensor, mounted on an outer wall of the mounting portion, and configured for cooperating with the induction member.

5. The handheld power tool main body according to claim 4, wherein the working mechanism comprises:
a pair of rollers, configured for acting on the working component; and
a roller base, configured for mounting the pair of rollers;
wherein the movable sleeve comprises:
a push rod, with one end extending into the mounting sleeve and sleeved on an outer periphery of the lead screw, and the other end extending out of the mounting sleeve and fixed to the roller base; and
a lead screw nut, movably sleeved on the outer periphery of the lead screw, and integrated with or separately arranged on one end of the push rod far away from the roller base;
wherein the induction member is mounted on an outer peripheral surface of the lead screw nut.

6. The handheld power tool main body according to claim 4, wherein an indicating recess is arranged at a top end of the mounting sleeve, and the indicating recess is aligned with the sensor in an axial direction.

7. The handheld power tool main body according to claim 5, wherein when the lead screw nut and the push rod are separately arranged, a through hole for the lead screw to pass therethrough is formed in a middle of the lead screw nut, one end of the push rod far away from the roller base forms an extending end extending into the through hole, and an acting surface for abutting against one end surface of the extending end is arranged in the through hole;
a clamping groove is formed by circumferential recessing of an inner wall of the through hole at one side of the acting surface, a limiting clamping member is mounted in the clamping groove, and the extending end is located between the limiting clamping member and the acting surface;
or, the through hole is provided with a clamping hole at one side of the acting surface, a clamping pin is arranged in the clamping hole, and the movable sleeve is connected to the extending end through the clamping pin.

8. The handheld power tool main body according to claim 7, wherein a mounting plate is integrated with or separately formed at one end of the lead screw adjacent to the reducer, a plane thrust bearing is arranged between the mounting plate and the mounting step, a deep groove ball bearing is arranged on one side of the mounting step away from the plane thrust bearing, and one end of the lead screw passes through the deep groove ball bearing and is combined with the reducer.

9. The handheld power tool main body according to any one of claims 1-8, further comprising a housing, wherein the mounting sleeve is mounted in the housing, one end of the pliers base extends into the housing and is rotatably connected to the mounting sleeve, the other end of the pliers base extends out of the housing, and a limiting member is arranged on a side surface of the pliers base;
a central hole for the pliers base to extend out is formed in a top of the housing, an edge of the central hole extends inward to form a limiting convex edge, and a projection of the limiting convex edge and a projection of the limiting member in an axial direction are overlapped partly;
or, a protruding limiting convex portion is arranged on an inner wall of the housing, and the limiting member is allowed to abut against the limiting convex portion when rotating with the pliers base.

10. A handheld power tool, comprising:
a main body; and
a working component detachably mounted on the main body and driven by the main body to work;
wherein the main body is the handheld power tool main body according to any one of claims 1-9.
